(19) Europäisches Patentamt

European Patent Office

Office européen des brevets

(11) **EP 1 394 120 A1**

(12) **EUROPEAN PATENT APPLICATION**
published in accordance with Art. 158(3) EPC

(43) Date of publication:
**03.03.2004 Bulletin 2004/10**

(21) Application number: **01274125.2**

(22) Date of filing: **30.11.2001**

(51) Int Cl.⁷: **C02F 1/50**, A61L 2/16,
A01N 33/12, A01N 47/44
// (C02F103/04, 103:42)

(86) International application number:
**PCT/RU2001/000519**

(87) International publication number:
**WO 2002/083572 (24.10.2002 Gazette 2002/43)**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **12.04.2001 RU 2001109751**

(71) Applicants:
• **Scherba, Alexey Semjonovich
  Moskovskaya obl., 141730 (RU)**
• **Zvyagin, Ilya Borisovich
  Moskovskaya obl., 141730 (RU)**

(72) Inventors:
• **Scherba, Alexey Semjonovich
  Moskovskaya obl., 141730 (RU)**
• **Zvyagin, Ilya Borisovich
  Moskovskaya obl., 141730 (RU)**

(74) Representative: **Einsel, Martin
  Patentanwälte,
  Einsel & Kollegen,
  Jasperalle 1a
  38102 Braunschweig (DE)**

(54) **DISINFECTANT**

(57) The invention relates to health, namely to means for disinfecting drinking water. The inventive disinfectant comprises a disinfecting agent and water. A first component in the form of polyhexamethylene guanidine hydrochloride or polyhexamethylene guanidine hydrophosphate and a second component in the form of alkyl dimethyl benzil ammonium chloride or a mixture thereof with quaternary ammonium salts of dimethylamine and/or of tertiary amine are used as disinfecting agents. The mass ratio $m$ between the first and second components ranges within an interval of $5:1 < m \leq 10:1$ when the content thereof ranges from 1.5 to 6.0 mass % and from 0.15 to 1.2 mass %, respectively.

**Description**

FIELD OF THE INVENTION

The invention relates, to sanitary and hygiene, and, in particular, to means for disinfecting drinking water, various kinds of water, for example, municipal and industrial effluents, swimming pool water, water in equipment cooling systems, and so on.

STATE OF THE ART

Many physical and physico-chemical techniques are used today to disinfect water today. Physico-chemical disinfecting techniques, for example, include treating water with disinfecting agents, such as chlorine or its derivatives, and ozone.

Chlorination, using essentially liquid chlorine, bleaching powder, and sodium hypochlorite, is the most widespread technique.

As a toxic substance, however, chlorine requires special care to be taken to transport, store and dose it. Moreover, chlorine ions present in water are converted by electrolytic processes into elementary chlorine that combines with organic substances in water to produce compounds displaying carcinogenic effects.

Synthetic bactericidal polyelectrolytes prepared on the basis of guanidine compounds, in particular, polyhexamethylene guanidine (PHMG), have been coming into wider use in recent years.

The closest prior art of the disinfectant of this invention is a disinfectant comprising a disinfecting agent, a surfactant, an odorant, a colorant, and water, in which the disinfecting agent is alkyl dimethyl benzyl ammonium chloride or a mixture thereof with quaternary ammonium salts of dimethylamine and tertiary amine or a salt of quaternary ammonium base modified by copolymers of polyvinyl pyrrolidone in combination with polyhexamethylene guanidine hydrochloride or polyhexamethylene guanidine phosphate at a mass ratio of 1:(1 to 4) (RU 2,057,796, C11D1/835, 3/48, 1996). The prior art disinfectant is intended for treating toilets and is unsuited for disinfecting drinking water because of the presence of a surfactant, odorant and colorant therein. Moreover, the ratio of the disinfecting agent components is inefficient when used for disinfecting water.

ESSENCE OF THE INVENTION

The technical effect of this invention consists in expanding the functions of the disinfectant by adapting it for use to disinfect water and intensify its bactericidal properties in use for this purpose.

The technical effect is achieved by a disinfectant comprising a disinfecting agent and water, in which the disinfecting agent is a first component in the form of a polyhexamethylene guanidine hydrochloride (PHMG chloride) or polyhexamethylene guanidine hydrophosphate (PHMG phosphate) and a second component in the form of alkyl dimethyl benzyl ammonium chloride (Katamine AB), or a mixture thereof with quaternary ammonium salts of dimethylamine and tertiary amine, the mass ratio m of the first and second components being in the range:

$$5:1 < m \leq 10:1.$$

Besides, the disinfectant may contain the aforesaid components in the following quantities, in mass %:

| | |
|---|---|
| first component | 1.5 to 6.0 |
| second component | 0.15 to 1.2 |
| water | the balance. |

Disinfection by the present disinfectant is based on the bactericidal activity of guanidine groups. The bactericidal mechanism of PHMG comprises the following stages: absorption of the polycation on the surface of a cell; reduction in the intensity of electron transport and efficiency of the phosphorilation system; structural breakup of the reaction foci of the photo system and, as a result, a rapid rise in the permeability of outer membranes; and significant swelling and destruction of the cell. PHMG causes the death of gram-positive and gram-negative microorganisms.

The flocculating effect of PHMG is based on the polarity of the guanidine grouping of a polymer that has a positive charge and imparting to PHMG the properties of a cation-type flocculant. Addition of polyelectrolyte to water in concentrations characteristic of a flocculant results in aggregation and reduction in the number of polluting particles. This occurs as a result of accretion of particles and confirms the flocculating properties of the reagent.

It has been established by testing that the disinfecting and flocculating effect of the polymer in an aqueous medium and its hygienic safety for a warm-blooded organism during continued use thereof allow PHMG to be used effectively in virtually all water treatment areas. The reagent can be used for purifying and disinfecting drinking water, municipal and industrial effluents, water in swimming pools and equipment cooling systems, and hot water in open heat supply systems, and for protecting pipelines and structures against pathogenic bacteria and biological fouling. In all cases, a desired technological effect is achieved and, simultaneously, water quality is improved. PHMG is a synthetic organic polymer that dissolves well in water. It is nonvolatile and does not impart odor or coloring to water.

Added to an aqueous medium, PHMG exhibits the properties of highly stable chemical substances and displays a prolonged bactericidal effect. After 20 days of observation, the compound was detected in water in virtually original desired concentrations. Moreover, a secondary pollutant (within the original microbial loading range) added to water disinfected once disappeared within an hour without requiring additional quantities of the disinfectant.

PHMG exists in the form of various salts.

PHMG synthesizing technique that has a practical value comprises producing, at the first stage, a principal polyelectrolyte modification, PHMG chloride (X = Cl). To produce other modifications, the hydrochloric acid anion is substituted in the primary polymer with any other anion of an inorganic or organic acid.

Two polymer salts have the greatest value for water purification and disinfection processes, in particular: PHMG chloride (commercial names Polycept and Metacid) and PHMG phosphate (Fogucid and Anavidin).

The second component of the disinfecting agent is alkyl dimethyl benzyl ammonium chloride (Katamin AB) or a mixture thereof with quaternary ammonium salts of dimethylamine and tertiary amine.

DESCRIPTION OF THE DRAWINGS

The drawings show dependences of the coli index and the total microbe count (TMC) on the dosage of this disinfectant for Compositions 1 and 2:

Figs. 1 and 2     autumn season; and
Figs. 3 and 4     winter season.

DESCRIPTION OF PREFERRED EMBODIMENTS OF THE METHOD

The disinfectant of this invention is obtained by first dissolving a calculated quantity of PHMG chloride or PHMG phosphate in water, whereupon a calculated quantity of a second component, for example, Katamine AB, is added thereto. In a preferred embodiment of the invention, the resultant disinfectant is a transparent liquid at a density close on 1 g/cm$^3$, which comprises polyhexamethylene guanidine hydrochloride with a mass share of 2.25% to 2.75% and alkyl dimethyl benzyl ammonium chloride with a mass share of 0.3 to 0.5%. Composition 1 comprises the components in amounts of 2.3% and 0.3%, respectively, and Composition 2 contains 2.7% and 0.5% of the components, respectively.

Laboratory tests were conducted to assess the disinfecting efficiency of the disinfectant in comparison with chlorine and sodium hypochlorite that are the most widespread disinfectants today. For this purpose, optimum doses of the disinfectant were selected according to such indicators as the total microbe count (TMC) and coli index.

A method of measuring the total number of bacteria in water comprises finding, in 1 cm$^3$ of water, the total content of mesophyllic, mesotropic aerobes and optional aerobes capable of growing on nutrient agar at a temperature of 37°C for 24 hours, producing colonies visible upon 2x to 5x magnification.

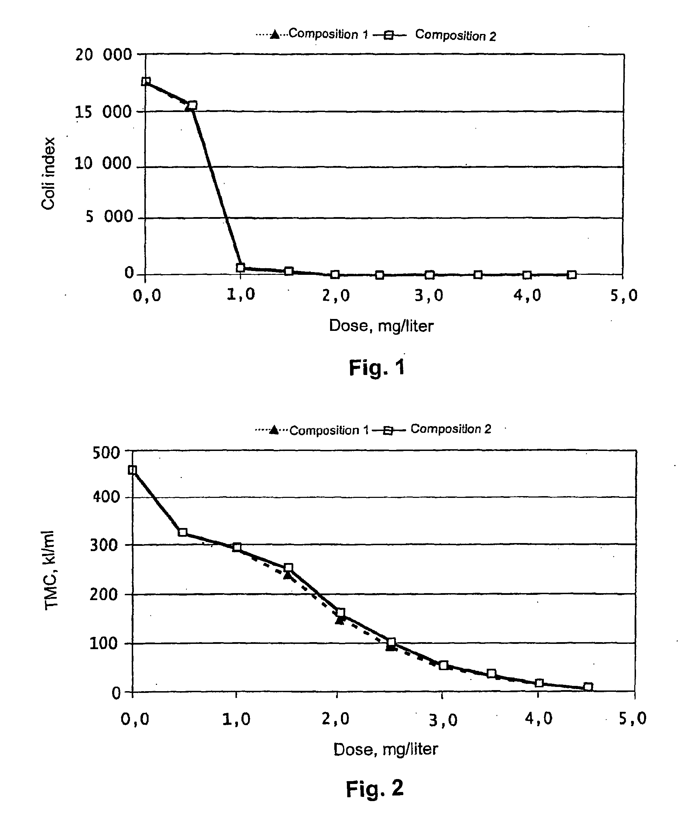

Averaged values obtained by treating river water with the above compositions in autumn and winter seasons are shown in Figs. 1-2 and 3-4, respectively.

As follows from Figs. 1 and 2, a drop in TMC and the coli index to microbiological levels for the autumn season (November) in accordance with the requirements of Sanitary Rules and Regulations 2.1.4.559-96 "Drinking Water. Hygienic Requirements to the Quality of Water of Centralized Drinking Water Supply Systems. Quality Control" is observed at a dose of 3 mg/liter of the disinfectant of this invention (TMC not exceeding 50 and coli index being zero).

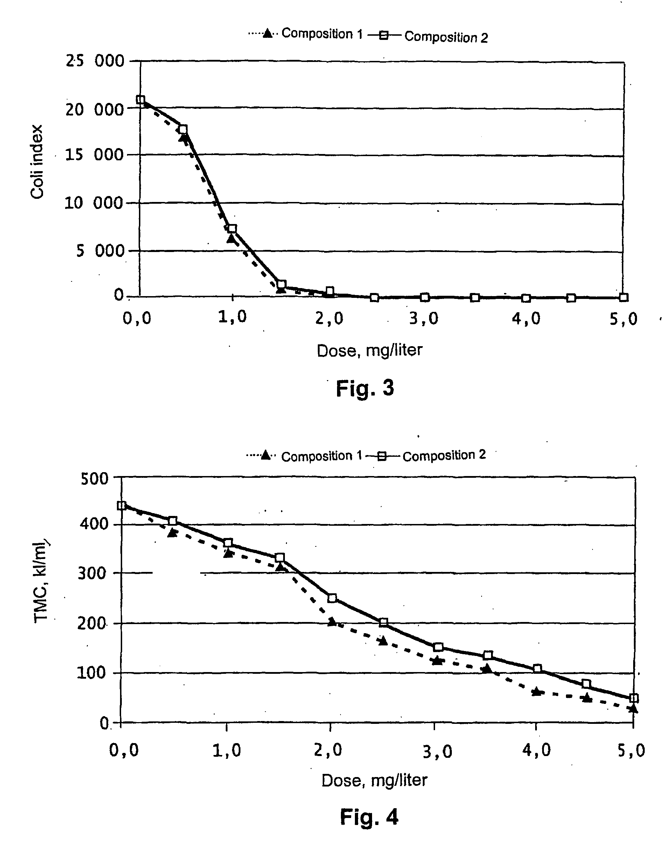

As is shown in Figs. 3 and 4, the disinfecting effect in river water in the winter season of the year (December) is observed at a disinfectant dose equal to 4 mg/liter.

Used at this rate, the disinfectant of this invention does not exhibit a negative effect on the organism when swallowed or applied to skin.

Preliminary tests of the disinfectant of this invention have demonstrated its lasting disinfecting effect on natural water used to prepare drinking water.

Comparative tests and evaluation of the effect the disinfectant has on the processing, organoleptic, physical and chemical characteristics of water have demonstrated the possibility of the disinfectant being used effectively on a broad scale in water preparation processes.

## INDUSTRIAL APPLICABILITY

Because of its disinfecting and hygienic properties, therefore, the disinfectant of this invention can be used for purifying and disinfecting drinking water, municipal and industrial effluents, water in swimming pools and equipment cooling systems, and hot water of open heat supply systems, and for protecting pipelines and structures against pathogenic bacteria and biological
fouling. In all cases, the desired technical effect is achieved and simultaneously water quality is improved.

## Claims

1.  A disinfectant comprising a disinfecting agent and water, in which the disinfecting agent contains a first component in the form of polyhexamethylene guanidine hydrochloride or polyhexamethylene guanidine hydrophosphate and a second component in the form of alkyl dimethyl benzyl ammonium chloride or a mixture thereof with quaternary ammonium salts of dimethylamine and/or tertiary amine, the mass ratio m of the first and second components being in the range of:

$$5:1 < m \leq 10:1.$$

2.  A disinfectant as claimed in claim 1, **characterized in that**, it contains the above components in the following proportions, in mass %:

    polyhexamethylene guanidine hydrochloride or polyhexamethylene guanidine hydrophosphate     1.5-6.0
    alkyl dimethyl benzyl ammonium chloride or a mixture thereof with quaternary ammonium salts of dimethylamine and/or tertiary amine                                                                                      0.15-1.2
    water                                                                                                                                                  the balance

Fig. 1

Fig. 2

Fig. 3

Fig. 4

| | | International application No. |
|---|---|---|
| | INTERNATIONAL SEARCH REPORT | PCT/RU01/00519 |

**A. CLASSIFICATION OF SUBJECT MATTER**   C 02 F 1/50, A 61 L 2/16, A 01 N 33/12, A 01 N 47/44//
// C 02 F 103:04, C 02 F 103:42

According to International Patent Classification (IPC) or to both national classification and IPC

**B. FIELDS SEARCHED**

Minimum documentation searched (classification system followed by classification symbols)

   C 02 F 1/50, A 61 L 2/16, A 01 N 33/12, A 01 N 47/44// C 02 F 103:04, C 02 F 103:42

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | RU 2057796 C1 ( SATOVA N. M. et al ), 10.04.1996; | 1-2 |
| A | GB 2353522 A (MARRAL CHEMICALS LIM), 28.02.2001, the claims, the abstract; | 1-2 |
| A | US 5492650 A ( HOECHST AKTIENGESSELSCHAFT), Feb.20, 1996, the claims, column 3 ; | 1-2 |
| A | DE 3528209 A1 (FRESENIUS AG), 24.4.86, the abstract, the claims | 1-2 |

☐ Further documents are listed in the continuation of Box C.   ☐ See patent family annex.

\*   Special categories of cited documents:

"A"   document defining the general state of the art which is not considered to be of particular relevance

"E"   earlier document but published on or after the international filing date

"L"   document which may throw doubts on priority claim(s) or which is cited to establish the publication date of another citation or other special reason (as specified)

"O"   document referring to an oral disclosure, use, exhibition or other means

"P"   document published prior to the international filing date but later than the priority date claimed

"T"   later document published after the international filing date or priority date and not in conflict with the application but cited to understand the principle or theory underlying the invention

"X"   document of particular relevance; the claimed invention cannot be considered novel or cannot be considered to involve an inventive step when the document is taken alone

"Y"   document of particular relevance; the claimed invention cannot be considered to involve an inventive step when the document is combined with one or more other such documents, such combination being obvious to a person skilled in the art

"&"   document member of the same patent family

| Date of the actual completion of the international search | Date of mailing of the international search report |
|---|---|
| 19 March 2002 (19.03.02) | 28 March 2002 (28.03.02) |

| Name and mailing address of the ISA/ RU | Authorized officer |
|---|---|
| Facsimile No. | Telephone No. |

Form PCT/ISA/210 (second sheet) (July 1992)